# EUROPEAN PATENT SPECIFICATION

(11) **EP 2 734 062 B1**
(45) Date of publication and mention of the grant of the patent: **24.04.2019**
(21) Application number: 12745944.4
(22) Date of filing: 19.07.2012
(51) Int. Cl.: A23L 2/44, A23L 2/58, A23L 2/68, A23L 2/02

(54) **FADING PROTECTION OF COLORS DERIVED FROM NATURAL SOURCES USED IN BEVERAGE PRODUCTS**
VERBLASSUNGSSCHUTZ FÜR FARBEN AUS NATÜRLICHEN QUELLEN BEI GETRÄNKEPRODUKTEN
PROTECTION CONTRE LA DÉCOLORATION DE COULEURS DÉRIVÉES DE SOURCES NATURELLES UTILISÉES DANS DES PRODUITS DE BOISSONS

(30) Priority: 20.07.2011 US 201161509864 P
(43) Date of publication of application: 28.05.2014
(73) Proprietor: Tropicana Products, Inc., Bradenton, FL 34208 (US)
(72) Inventor: BOLES, Kristi-Ann, Howard Beach, New York 11414 (US); BRAND-LEVINE, Dalit, Pleasantville, New York 10570 (US); GAWKOWSKI, Dorota, Elmwood Park, New Jersey 07407 (US); ROY, Glenn, Beacon, New York 12508 (US); TALEBI, Fari, New York, New York 10017 (US)
(74) Representative: Maiwald Patent- und Rechtsanwaltsgesellschaft mbH
(86) International application number: PCT/US2012/047348
(87) International publication number: WO 2013/013014

(56) References cited:
- EP-A1- 1 183 954
- EP-A2- 0 825 196
- US-A1- 2004 091 589
- US-A1- 2006 051 472
- US-A1- 2010 075 005
- US-A1- 2010 151 084

## Description

### FIELD OF THE INVENTION

This invention relates to beverages and other beverage products that include colors derived from natural sources, such as finished beverages, concentrates, syrups and the like. In particular, this invention relates to beverage products having formulations for preventing or inhibiting fading of colors derived from natural sources, or their synthetic equivalents.

### BACKGROUND

It has long been known to produce beverages of various formulations. Improved and new formulations are desirable to achieve desired nutritional characteristics, flavor, shelf life, and other objectives. For example, it would be desirable to prevent the fading of colors derived from natural sources in beverages that often occurs over time, particularly when the beverage is subjected to exposure to light, such as UV light radiation, ambient light, and combinations thereof. For example, following manufacture, beverage products are generally not stored in the dark during distribution. In addition, beverage products may be subjected to light exposure, including within the UV wavelengths, for several weeks during storage prior to sale.

It is believed that reduction is primarily responsible for color instability or color fading. Reduction can be chemically-, light- or biologically induced by microbes or enzymes in a given beverage composition, though light is typically the predominant initiator. Secondary chemical reduction initiators may be present in certain beverages, such as ascorbic acid, and hydroxymethylfurfural (HMF formed in HFCS). Moreover, these initiators work with light to fade colors, thus the presence of an antioxidant, such as ascorbic acid, in the beverage product can promote the fading of colors derived from natural sources.

The intensity of a color in an aqueous solution has been observed to be a factor in color fading. In particular, a product containing a low concentration of a color tends to visibly fade to a greater extent than the same product containing a higher concentration of the color. As a result, inhibiting color fading of products comprising light or pastel colors is especially challenging.

EP 1 183 954 A1 discloses an anti-fading agent for a pigment, characterized by comprising as active ingredients at least one oligosaccharide selected from the group consisting of nigerooligosaccharide, maltooligosaccharide and panose, when so required, in addition of an antioxidant. The anti-fading agent can advantageously inhibit fading in colors (including fading in colors by light irradiation and heat treatment) of natural pigments such as anthocyanin-based pigments, flavonoid-based pigments, carotenoid-based pigments and the like, and is useful for colored beverage and food products, pharmaceutical drugs, cosmetics and the like with which the fading in colors may be a problem.

It is an object of the invention to provide beverages and other beverage products having desirable appearance, taste and health properties. It is an object of at least certain embodiments of the invention to provide beverages and other beverage products having improved formulations to inhibit fading of colors derived from natural sources. These and other objects, features and advantages of the invention or of certain embodiments of the invention will be apparent to those skilled in the art from the following disclosure and description of exemplary embodiments.

### SUMMARY

In accordance with one aspect, a beverage product is provided that includes water, a color derived from natural sources or their synthetic equivalents and a color fading inhibitor comprising a compound selected from enzymatically modified isoquercitrin (EMIQ), rutin, and myricitrin, in an amount of at least 30 ppm to inhibit fading of the color derived from natural sources or its synthetic equivalent, wherein the color derived from natural sources is selected from the group consisting of beta-carotene, black carrot, natural apple extract, and combinations thererof. In certain embodiments, fumaric acid is also included in the beverage product. The beverage product optionally further comprises at least one nutrient.

In certain embodiments, fading of colors derived from natural sources is quantitatively determined, wherein the fading is inhibited such that the beverage product has an absorbance value at the optimal wavelength for the color derived from natural sources of no more than 25% less than the light measure value of the same beverage product stored for the same amount of time in the dark, as measured by a spectrophotometer, following exposure of the beverage product for thirty-six hours to UV light radiation.

In accordance with another aspect, a beverage product is provided that includes water, black carrot color, fumaric acid, and enzymatically modified isoquercitrin (EMIQ) to inhibit color fading of the beverage product. In certain embodiments, the fumaric acid is present in the beverage product at a concentration of between 100 ppm and 1000 ppm. The beverage product optionally further comprises at least one nutrient, for instance, selected from maltodextrin, ascorbic acid, vitamin E, magnesium, and zinc.

In accordance with a further aspect, a method is provided for inhibiting color fading of a beverage product exposed to light comprising providing a beverage composition comprising a color derived from natural sources or its synthetic equivalent and adding to the beverage composition a color fading inhibitor comprising a compound selected from the group consisting of enzymatically modified isoquercitrin, rutin and myricitrin in an amount effective to inhibit color fading, wherein the color derived from natural sources is selected from the group consisting of beta-carotene, black carrot, natural apple extract, and combinations thereof. The method may further include adding fumaric acid to the beverage composition. The beverage composition optionally further comprises at least one nutrient.

In certain exemplary embodiments, the beverage product may be a concentrate, e.g., a syrup. In yet other certain embodiments, the concentrate may be a dry powder mix. In certain embodiments, a plurality of colors derived from natural sources is utilized.

It will be appreciated by those skilled in the art, given the benefit of the following description of certain exemplary embodiments of the beverage and other beverage products disclosed here, that at least certain embodiments of the invention have improved or alternative formulations suitable to provide desirable taste profiles, nutritional characteristics, etc. These and other aspects, features and advantages of the invention or of certain embodiments of the invention will be further understood by those skilled in the art from the following description of exemplary embodiments.

### BRIEF DESCRIPTION OF THE DRAWINGS

FIG. 1 shows a comparison of color fading following UV exposure for different lengths of time, of beverage samples colored with 71.8 ppm beta-carotene and including enzymatically modified isoquercitrin.
FIG. 2 shows a comparison of color fading following UV exposure for different lengths of time, of beverage samples colored with 8.6 ppm beta-carotene and including enzymatically modified isoquercitrin.
FIG. 3 shows a comparison of color fading following UV exposure of beverage samples colored with 90 µL/L natural apple extract.
FIG. 4 shows a comparison of color fading following UV exposure for different lengths of time, of beverage samples colored with 0.403 g/L black carrot and including enzymatically modified isoquercitrin and fumaric acid.
FIG. 5 shows a comparison of color fading following UV exposure of beverage samples colored with 0.403 g/L black carrot.
FIG. 6 shows a comparison of color fading following UV exposure of beverage samples colored with 0.2 g/L purple sweet potato.
FIG. 7 shows a comparison of color fading following UV exposure of beverage samples colored with 18.1 ppm or 7.6 ppm beta-carotene.

### DETAILED DESCRIPTION OF EMBODIMENTS

It was surprisingly discovered that color fading of beverage products colored with certain colors derived from natural sources (or their synthetic equivalents) upon exposure to UV light radiation is inhibited by the presence of enzymatically modified isoquercitrin (EMIQ), rutin and myricitrin in an amount of at least 30 ppm. In certain embodiments, the concentration of EMIQ is at least 100 ppm, such as between 30 ppm and 1000 ppm, or between 80 ppm and 500 ppm, or 150 ppm. EMIQ is also known as *alpha*-Glycosyl isoquercitrin and is commercially available as the product SANMELIN® (San-Ei Gen F.F.I., Inc.). EMIQ has the following general structure, where the number of glucose units varies between 1 and 11:

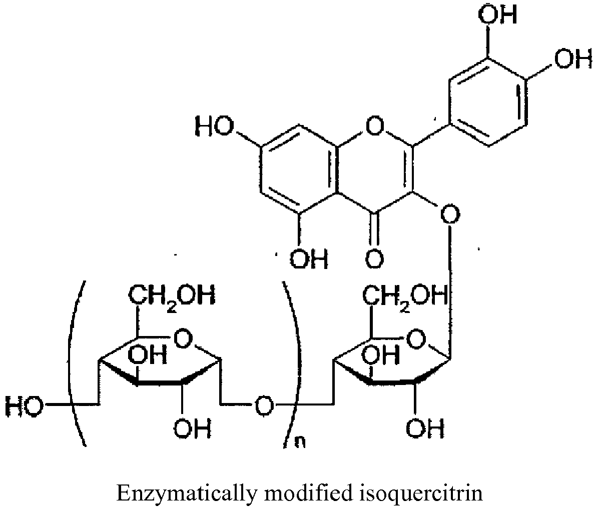

This discovery of anti-fading activity of EMIQ is in contrast to the disclosure of co-owned U.S. Patent No. 8,158,183, which tested enzymatically modified isoquercitrin for efficacy for inhibition of fading of colors derived from one or more natural sources in beverage products and subjected to thermal stress. Example 1 of U.S. Patent No. 8,158,183 disclosed spiking 300 mL samples of a beverage containing purple sweet potato liquid color with one of a plurality of compounds, including 200 µL enzymatically modified isoquercitrin, followed by incubation of each spiked beverage at 43.33 °C (110° F). The EMIQ did not show promise to inhibit fading of the purple sweet potato color, which is an anthocyanin compound, in the tested beverage. Flavonol glycosides, including EMIQ, rutin and myricitrin, have been disclosed to inhibit degradation of the sweetener monatin during heat and UV radiation stress, as disclosed in co-owned U.S. Patent No. 8,142,829.

The colors derived from natural sources include the carotenoid beta-carotene, the compound formed from enzymatic or non-enzymatic browning natural apple extract, or the anthocyanin black carrot. Each color derived from natural sources may be present in the beverage product at a concentration of between 0.01 and 500 ppm, or between 5 ppm and 400 ppm, or 10 ppm and 300 ppm, or between 15 ppm and 200 ppm. According to certain embodiments, the one or more colors comprise a synthetic equivalent to a color derived from a natural source, having the same structure as the color derived from a natural source but having been prepared synthetically. In certain embodiments, fumaric acid is present in the beverage product to synergistically inhibit color fading with the EMIQ.

In certain embodiments, the inhibition of light fading is determined qualitatively. In such embodiments, following exposure to UV light, the beverage product according to the invention shows acceptable improvement in appearance when compared to the same beverage product excluding a flavonol glycoside. The acceptable appearance is determined qualitatively by comparing the beverage product that has been exposed to UV light to a control beverage product, which comprises the same ingredients but has not been exposed to UV light.

The inhibition of light fading is also determined quantitatively. In certain embodiments, following exposure of the beverage product to UV light radiation having an intensity of 0.35 W/m² measured at 340 nm and a wavelength that simulates unfiltered sunlight in 30 °C (86 degree Fahrenheit) air temperature for thirty-six hours after production, the beverage product has an absorbance value of no more than 25% less than the light measure value of the same beverage product stored in the dark for the same amount of time. Similarly, in certain embodiments, following exposure of the beverage product to UV light radiation having an intensity of 0.35 W/m² measured at 340 nm and a wavelength that simulates unfiltered sunlight in 30 °C (86 degree Fahrenheit) air temperature for twelve hours after production, the beverage product has an absorbance value of no more than 10% less than the light measure value of the same beverage product stored in the dark for the same amount of time.

Color fading inhibition under such intense UV light radiation suggests that beverage products according to embodiments of the invention will also exhibit inhibited color fading upon exposure to less intense, ambient, light conditions for longer periods of time, such as natural and artificial lighting during transport and storage of the beverage products prior to consumption.

It should be understood that beverages and other beverage products in accordance with this disclosure may have any of numerous different specific formulations or constitutions. The formulation of a beverage product in accordance with this disclosure can vary to a certain extent, depending upon such factors as the product's intended market segment, its desired nutritional characteristics, flavor profile and the like. For example, it will generally be an option to add further ingredients to the formulation of a particular beverage embodiment, including any of the beverage formulations described below. Additional (i.e., more and/or other) sweeteners may be added, flavorings, electrolytes, vitamins, fruit juices or other fruit products, tastants, masking agents and the like, flavor enhancers, and/or carbonation typically can be added to any such formulations to vary the taste, mouthfeel, nutritional characteristics, etc.

In general, a beverage product in accordance with this disclosure typically comprises at least water, one or more colors derived from natural sources (or their synthetic equivalents), a color fading inhibitor comprising a compound selected from EMIQ, rutin and myricitrin, acidulant and flavoring, and typically also sweetener. In certain aspects, nutrients such as fiber, vitamins and minerals are advantageously included in the beverage products of the invention. Exemplary flavorings which may be suitable for at least certain formulations in accordance with this disclosure include herbal flavoring, fruit flavoring, spice flavorings and others. Carbonation in the form of carbon dioxide may be added for effervescence. Preservatives can be added if desired, depending upon the other ingredients, production technique, desired shelf life, etc. Additional and alternative suitable ingredients will be recognized by those skilled in the art given the benefit of this disclosure.

The beverage products disclosed here include beverages, i.e., ready to drink liquid formulations, beverage concentrates and the like. Beverages include, e.g., enhanced waters, liquid, slurry or solid concentrates, fruit juice-flavored and juice-containing beverages.

At least certain exemplary embodiments of the beverage concentrates contemplated are prepared with an initial volume of water to which the additional ingredients are added. Full strength beverage compositions can be formed from the beverage concentrate by adding further volumes of water to the concentrate. Typically, for example, full strength beverages can be prepared from the concentrates by combining approximately 1 part concentrate with between approximately 3 to approximately 7 parts water. In certain exemplary embodiments the full strength beverage is prepared by combining 1 part concentrate with 5 parts water. In certain exemplary embodiments the additional water used to form the full strength beverages is carbonated water. In certain other embodiments, a full strength beverage is directly prepared without the formation of a concentrate and subsequent dilution.

It should be understood that the term "about" is used here and in similar applications in this disclosure and the appended claims to account for ordinary inaccuracy and variability in measurement and the like.

Water is a basic ingredient in the beverages disclosed here, typically being the vehicle or primary liquid portion in which the remaining ingredients are dissolved, emulsified, suspended or dispersed. Purified water can be used in the manufacture of certain embodiments of the beverages disclosed here, and water of a standard beverage quality can be employed in order not to adversely affect beverage taste, odor, or appearance. The water typically will be clear, colorless, free from objectionable minerals, tastes and odors, free from organic matter, low in alkalinity and of acceptable microbiological quality based on industry and government standards applicable at the time of producing the beverage. In certain typical embodiments, water is present at a level of from 80% to 99.9% by weight of the beverage. In at least certain exemplary embodiments the water used in beverages and concentrates disclosed here is "treated water," which refers to water that has been treated to reduce the total dissolved solids of the water prior to optional supplementation, e.g., with calcium as disclosed in U.S. Patent 7,052,725. Methods of producing treated water are known to those of ordinary skill in the art and include deionization, distillation, filtration and reverse osmosis ("r-o"), among others. The terms "treated water," "purified water,", "demineralized water," "distilled water," and "r-o water" are understood to be generally synonymous in this discussion, referring to water from which substantially all mineral content has been removed, typically containing no more than 500 ppm total dissolved solids, e.g. 250 ppm total dissolved solids.

In certain embodiments, one or more colors derived from natural sources may be used as the only source of added colorant in beverage compositions, thereby avoiding the use of synthetic compounds to provide a desired color to the composition. In certain embodiments, the synthetic equivalents of one or more colors derived from natural sources are used as the only sources of added colorant in beverage compositions. In alternate embodiments, one or more colors derived from natural sources, or their synthetic equivalents, may be employed in combination with synthetic colors. According to certain embodiments of the beverage products disclosed here, the one or more colors derived from natural sources comprise one or more colors each derived from natural sources. As used herein, the term "color derived from natural sources" includes any and all extracted products from one or more pigmented biological materials. In certain exemplary embodiments, the biological materials comprise plant materials. The coloring provided by colors derived from natural sources may be due to the presence of flavonoid compounds, such as anthocyanin compounds. Non-limiting examples of colors derived from natural sources comprising anthocyanins include black carrot color. Alternatively, pigmentation can be provided by various other natural compounds, for example carotenoids such as beta-carotene or natural apple extract. As used herein, "synthetic equivalents" includes any and all synthetically manufactured compounds having the same structure as a color derived from a natural source.

As disclosed above, anthocyanins are a class of compounds that may provide pigmentation to colors derived from natural sources. For example, anthocyanins found in black currants (Ribes nigrum) that provide pigmentation include 3-diglucoside and 3-rutinoside of cyanidin and delphinidin. Similarly, blueberries (Vaccinium augustifolium or Vaccinium corymbosum) typically contain the following anthocyanins that provide pigmentation: 3-glucosides, 3-galactosides, and 3-arabinosides of cyanidin, delphinidin, peonidin, petunidin, and malvidin. Black carrot color comprises a plurality of anthocyanin compounds. A basic chemical structure to describe anthocyanins is shown below. Table 1 illustrates that different anthocyanin compounds may be formed by selecting various chemical groups to be the substituents R through R3.

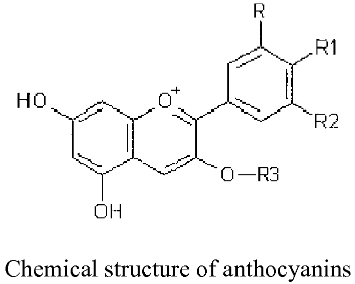

**Table 1. Anthocyanin compounds**

| **Compound** | **R** | **R1** | **R2** | **R3** |
|---|---|---|---|---|
| Cyanidin 3-O-glycoside¹ | OH | OH | H | arabinose or glucose or galactose |
| Delphinidin 3-O-glycoside² | OH | OH | OH | arabinose or glucose or galactose |
| Malvidin 3-O-glycoside³ | OCH3 | OH | OCH3 | arabinose or glucose or galactose |
| Peonidin 3-O-glycoside⁴ | OCH3 | OH | H | arabinose or glucose or galactose |
| Petunidin 3-O-glycoside⁵ | OH | OH | OCH3 | arabinose or glucose or galactose |

| | | | | |
|---|---|---|---|---|
| 1. Prior R.L., Cao G., Martin A., Sofic E., McEwen J., O'Brien C, Lischner N., Elhenfeldt M, Kalt W., Krewer G., Mainland CM., J. Agric. Food Chem. 46, 2686 (1998). 2. Mazza G., Miniati E., Anthocyanins in Fruits, Vegetables and Grains, Boca Raton: CRC, p 362.-Cited in Prior et al., J. Agric. Food Chem. 46, 2686 (1998). 3. Brenneisen R., Steinegger E., Pharm. Acta Helv. 56, 180 (1981). 4. Brenneisen R., Steinegger E., Pharm. Acta Helv. 56, 341 (1981). 5. Jaakola L., Maatta K., Pirttila A.M., Torronen R., Karenlampi S., Hothola A., Plant Physiology 130, 729 (2002). | | | | |

Further examples of colors derived from natural sources are carotenoids. Carotenoids include red, orange, and yellow pigments derived from certain fruits, vegetables, and whole grains. For example, beta-carotene is a precursor to vitamin A and is the most common form of carotene. The chemical structure of beta-carotene is provided below.

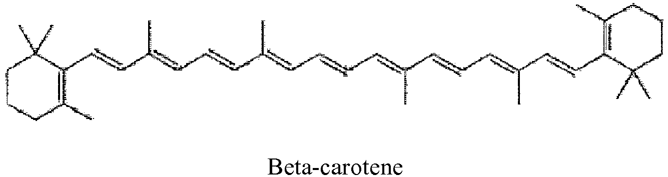

Further examples of colors derived from natural sources are compounds formed as a result of enzymatic and non-enzymatic browning. Natural apple extract is an example of a brown color provided by compounds formed as a result of enzymatic and non-enzymatic browning, in this example, browning of apple fruit and/or juice.

The mechanism for inhibiting fading of colors derived from natural sources of the present invention under exposure UV light radiation is not clearly understood. Without wishing to be bound by theory, it appears that the fading of colors derived from natural sources is the result of an electronic reduction of the color molecule. However, EMIQ was observed to be effective to inhibit the fading of only certain colors derived from natural sources under exposure to UV light radiation. For example, EMIQ (in combination with fumaric acid) was not significantly effective to inhibit color fading of purple sweet potato color (an anthocyanin), as described in Comparative Example 8 below.

Acid used in beverages disclosed here can serve any one or more of several functions, including, for example, providing antioxidant activity, lending tartness to the taste of the beverage, enhancing palatability, increasing thirst quenching effect, modifying sweetness and acting as a mild preservative by providing microbiological stability. Ascorbic acid, commonly referred to as "vitamin C", is often employed as an acidulant in beverages to also provide a vitamin to the consumer. However, ascorbic acid acts as an antioxidant in the beverage and promotes the fading of colors derived from natural sources, particularly when the beverage is subjected to thermal stress. It has now been found that the addition a color fading inhibitor comprising EMIQ, and optionally fumaric acid, to the beverage can inhibit the fading of colors derived from natural sources when subjected to UV light radiation, though, even in the presence of ascorbic acid.

For example, fumaric acid may be used alone or in combination with at least one other edible acid in a beverage composition, with EMIQ to synergistically provide fading inhibition of colors derived from natural sources, as well as to serve any of the other purposes of acids in beverages discussed above. In certain embodiments, between 100 ppm and 1000 ppm of fumaric acid may be incorporated into a beverage composition containing EMIQ to inhibit fading of colors derived from natural sources.

In certain embodiments of the invention, the effective amount of the EMIQ may be determined either qualitatively or quantitatively. For example, the effective amount may be an amount that inhibits color fading such that any change in color is not readily noticeable to the human eye. Alternatively, the effective amount may be defined quantitatively as the amount of EMIQ that prevents the absorbance of a beverage composition at its optimal wavelength measured using a spectrophotometer from decreasing more than a particular magnitude, such as 25%, or 20%, or 15%, or 10%, of the initial absorbance of the composition at its maximum wavelength.

In more general terms, the absorbance value of any beverage containing colors derived from natural sources may decrease 15% or less during storage under exposure to light, when the beverage comprises EMIQ as a fading inhibitor, for instance alone or in combination with fumaric acid. This quantitative measure closely aligns with a visual qualitative assessment of the beverages as the consumer would observe. Light exposure conditions may include 36 hours of UV light radiation at an intensity of 0.35 W/m² measured at 340 nm at a wavelength that simulates unfiltered sunlight in 30 °C (86 degree Fahrenheit) air temperature. It may be preferable to inhibit color fading of compositions containing colors derived from natural sources sufficient to prevent the absorbance of the composition from decreasing more than 10% and potentially being noticeable to the human eye.

In an embodiment of the invention, fumaric acid may be provided by an acid blend of fumaric acid, malic acid and tartaric acid, which can be commercially obtained as Fruitaric® acid, such as the Fruitaric® acid manufactured by Isegen South Africa (Pty) Ltd, Isipingo, Durban, South Africa.

The acid can be used in solution form, for example, and in an amount sufficient to provide the desired pH of the beverage. Typically, for example, the one or more acids of the acidulant are used in amount, collectively, of from 0.01% to 1.0% by weight of the beverage, e.g., from 0.05% to 0.5% by weight of the beverage, such as 0.1% to 0.25% by weight of the beverage, depending upon the acidulant used, desired pH, other ingredients used, etc. In certain embodiments of the invention, all of the acid included in a beverage composition may be provided by one or more alpha,beta-unsaturated carboxylic acids.

The pH of at least certain exemplary embodiments of the beverages disclosed here can be a value within the range of 2.5 to 4.6. The acid in certain exemplary embodiments can enhance beverage flavor. Too much acid can impair the beverage flavor and result in sourness or other off-taste, while too little acid can make the beverage taste flat and reduce microbiological safety of the product. It will be within the ability of those skilled in the art, given the benefit of this disclosure, to select a suitable acid or combination of acids and the amounts of such acids for the acidulant component of any particular embodiment of the beverage products disclosed here.

Sweeteners suitable for use in various embodiments of the beverages disclosed here include nutritive and non-nutritive, natural and artificial or synthetic sweeteners. Suitable non-nutritive sweeteners and combinations of sweeteners are selected for the desired nutritional characteristics, taste profile for the beverage, mouthfeel and other organoleptic factors. Non-nutritive sweeteners suitable for at least certain exemplary embodiments include, but are not limited to, for example, peptide based sweeteners, e.g., aspartame, neotame, and alitame, and non-peptide based sweeteners, for example, sodium saccharin, calcium saccharin, acesulfame potassium, sodium cyclamate, calcium cyclamate, neohesperidin dihydrochalcone, and sucralose. In certain embodiments the sweetener comprises acesulfame potassium. Other non-nutritive sweeteners suitable for at least certain exemplary embodiments include, for example, sorbitol, mannitol, xylitol, glycyrrhizin, D-tagatose, erythritol, meso-erythritol, maltitol, maltose, lactose, fructo-oligosaccharides, Lo Han Guo powder, xylose, arabinose, isomalt, lactitol, maltitol, trehalose, and ribose, and protein sweeteners such as thaumatin, monellin, brazzein, L-alanine and glycine, related compounds, and mixtures of any of them. Lo Han Guo, rebaudioside A, rebaudioside D, and monatin and related compounds are natural non-nutritive potent sweeteners.

In at least certain exemplary embodiments of the beverages disclosed here, the sweetener component can include nutritive, natural crystalline or liquid sweeteners such as sucrose, liquid sucrose, fructose, liquid fructose, glucose, liquid glucose, glucose-fructose syrup from natural sources such as apple, chicory, honey, etc., e.g., high fructose corn syrup, invert sugar, maple syrup, maple sugar, honey, brown sugar molasses, e.g., cane molasses, such as first molasses, second molasses, blackstrap molasses, and sugar beet molasses, sorghum syrup, Lo Han Guo juice concentrate and/or others. Such sweeteners are present in at least certain exemplary embodiments in an amount of from 0.1% to 20% by weight of the beverage, such as from 6% to 16% by weight, depending upon the desired level of sweetness for the beverage. To achieve desired beverage uniformity, texture and taste, in certain exemplary embodiments of the natural beverage products disclosed here, standardized liquid sugars as are commonly employed in the beverage industry can be used. Typically such standardized sweeteners are free of traces of nonsugar solids which could adversely affect the flavor, color or consistency of the beverage.

Non-nutritive, high potency sweeteners typically are employed at a level of milligrams per fluid ounce of beverage, according to their sweetening power, any applicable regulatory provisions of the country where the beverage is to be marketed, the desired level of sweetness of the beverage, etc. It will be within the ability of those skilled in the art, given the benefit of this disclosure, to select suitable additional or alternative sweeteners for use in various embodiments of the beverage products disclosed here.

Preservatives may be used in certain embodiments of the beverages disclosed here. That is, certain exemplary embodiments contain an optional dissolved preservative system. Solutions with a pH below 4 and especially those below 3 typically are "microstable," i.e., they resist growth of microorganisms, and so are suitable for longer term storage prior to consumption without the need for further preservatives. However, lowering the pH alone may not be enough to provide a microstable beverage, and an additional preservative system can be used if desired. If a preservative system is used, it can be added to the beverage product at any suitable time during production, e.g., in some cases prior to the addition of the sweetener. As used here, the terms "preservation system" or "preservatives" include all suitable preservatives approved for use in food and beverage compositions, including, without limitation, such known chemical preservatives as benzoic acid, benzoates, e.g., sodium, calcium, and potassium benzoate, sorbates, e.g., sodium, calcium, and potassium sorbate, citrates, e.g., sodium citrate and potassium citrate, polyphosphates, e.g., sodium hexametaphosphate (SHMP), lauryl arginate ester, cinnamic acid, e.g., sodium and potassium cinnamates, polylysine, and antimicrobial essential oils, dimethyl dicarbonate, and mixtures thereof, and antioxidants such as ascorbic acid, EDTA, BHA, BHT, TBHQ, dehydroacetic acid, ethoxyquin, heptylparaben, and combinations thereof.

Preservatives can be used in amounts not exceeding mandated maximum levels under applicable laws and regulations. The level of preservative used typically is adjusted according to the planned final product pH, as well as an evaluation of the microbiological spoilage potential of the particular beverage formulation. The maximum level employed typically is 0.05% by weight of the beverage. It will be within the ability of those skilled in the art, given the benefit of this disclosure, to select a suitable preservative or combination of preservatives for beverages according to this disclosure. In certain embodiments of the invention, benzoic acid or its salts (benzoates) may be employed as preservatives in the beverage products.

Other methods of beverage preservation suitable for at least certain exemplary embodiments of the beverage products disclosed here include, e.g., aseptic packaging and/or heat treatment or thermal processing steps, such as hot filling and tunnel pasteurization. Such steps can be used to reduce yeast, mold and microbial growth in the beverage products. For example, U.S. Patent No. 4,830,862 to Braun et al. discloses the use of pasteurization in the production of fruit juice beverages as well as the use of suitable preservatives in carbonated beverages. U.S. Patent No. 4,925,686 to Kastin discloses a heat-pasteurized freezable fruit juice composition which contains sodium benzoate and potassium sorbate. In general, heat treatment includes hot fill methods typically using high temperatures for a short time, e.g., 87.78 °C (190° F) for 10 seconds, tunnel pasteurization methods typically using lower temperatures for a longer time, e.g., 71.11 °C (160° F) for 10-15 minutes, and retort methods typically using, e.g., 121.11 °C (250° F) for 3-5 minutes at elevated pressure, i.e., at pressure above 1 atmosphere.

The beverage products disclosed here optionally contain a flavor composition, for example, any natural or synthetic flavor, such as natural and synthetic fruit flavors, botanical flavors, other flavors, and mixtures thereof. As used here, the term "fruit flavor" refers generally to those flavors derived from the edible reproductive part of a seed plant. Included are both those wherein a sweet pulp is associated with the seed, e.g., banana, tomato, cranberry and the like, and those having a small, fleshy berry. The term berry also is used here to include aggregate fruits, i.e., not "true" berries, but that are commonly accepted as a berry. Also included within the term "fruit flavor" are synthetically prepared flavors made to simulate fruit flavors derived from natural sources. Examples of suitable fruit or berry sources include whole berries or portions thereof, berry juice, berry juice concentrates, berry purees and blends thereof, dried berry powders, dried berry juice powders, and the like.

Exemplary fruit flavors include the citrus flavors, e.g., orange, lemon, lime and grapefruit, and such flavors as apple, pomegranate, grape, cherry, and pineapple flavors and the like, and mixtures thereof. In certain exemplary embodiments the beverage concentrates and beverages comprise a fruit flavor component, e.g., a juice concentrate or juice. As used here, the term "botanical flavor" refers to flavors derived from parts of a plant other than the fruit. As such, botanical flavors can include those flavors derived from essential oils and extracts of nuts, bark, roots and leaves. Also included within the term "botanical flavor" are synthetically prepared flavors made to simulate botanical flavors derived from natural sources. Examples of such flavors include cola flavors, tea flavors, and the like, and mixtures thereof. The flavor component can further comprise a blend of the above-mentioned flavors. The particular amount of the flavor component useful for imparting flavor characteristics to the beverages of the present invention will depend upon the flavor(s) selected, the flavor impression desired, and the form of the flavor component. Those skilled in the art, given the benefit of this disclosure, will be readily able to determine the amount of any particular flavor component(s) used to achieve the desired flavor impression.

Juices suitable for use in at least certain exemplary embodiments of the beverage products disclosed here include, e.g., fruit, vegetable and berry juices. Juices can be employed in the present invention in the form of a concentrate, puree, single-strength juice, or other suitable forms. The term "juice" as used here includes single-strength fruit, berry, or vegetable juice, as well as concentrates, purees, milks, and other forms. Multiple different fruit, vegetable and/or berry juices can be combined, optionally along with other flavorings, to generate a beverage having the desired flavor. Examples of suitable juice sources include plum, prune, date, currant, fig, grape, red grape, sweet potato, raisin, cranberry, pineapple, peach, banana, apple, pear, guava, apricot, Saskatoon berry, blueberry, plains berry, prairie berry, mulberry, elderberry, Barbados cherry (acerola cherry), choke cherry, date, coconut, olive, raspberry, strawberry, huckleberry, loganberry, currant, dewberry, boysenberry, kiwi, cherry, blackberry, quince, buckthorn, passion fruit, sloe, rowan, gooseberry, pomegranate, persimmon, mango, rhubarb, papaya, lychee, cashew apple, lemon, orange, lime, tangerine, mandarin orange, tangelo, and pomelo and grapefruit, etc. Numerous additional and alternative juices suitable for use in at least certain exemplary embodiments will be apparent to those skilled in the art given the benefit of this disclosure. In the beverages of the present invention employing juice, juice may be used, for example, at a level of at least 0.2% by weight of the beverage. In certain exemplary embodiments juice is employed at a level of from 0.2% to 40% by weight of the beverage. Typically, juice can be used, if at all, in an amount of from 1% to 20% by weight.

Other flavorings suitable for use in at least certain exemplary embodiments of the beverage products disclosed here include, e.g., spice flavorings, such as cassia, clove, cinnamon, pepper, ginger, vanilla spice flavorings, cardamom, coriander, root beer, sassafras, ginseng, and others. Numerous additional and alternative flavorings suitable for use in at least certain exemplary embodiments will be apparent to those skilled in the art given the benefit of this disclosure. Flavorings can be in the form of an extract, oleoresin, juice concentrate, bottler's base, or other forms known in the art. In at least certain exemplary embodiments, such spice or other flavors complement that of a juice or juice combination.

The one or more flavorings can be used in the form of an emulsion. A flavoring emulsion can be prepared by mixing some or all of the flavorings together, optionally together with other ingredients of the beverage, and an emulsifying agent. The emulsifying agent may be added with or after the flavorings mixed together. In certain exemplary embodiments the emulsifying agent is water-soluble. Exemplary suitable emulsifying agents include gum acacia, modified starch, carboxymethylcellulose, gum tragacanth, gum ghatti and other suitable gums. Additional suitable emulsifying agents will be apparent to those skilled in the art of beverage formulations, given the benefit of this disclosure. The emulsifier in exemplary embodiments comprises greater than 3% of the mixture of flavorings and emulsifier. In certain exemplary embodiments the emulsifier is from 5% to 30% of the mixture.

Carbon dioxide can be used to provide effervescence to certain exemplary embodiments of the beverages disclosed here. Any of the techniques and carbonating equipment known in the art for carbonating beverages can be employed. Carbon dioxide can enhance the beverage taste and appearance and can aid in safeguarding the beverage purity by inhibiting and destroying objectionable bacteria. In certain embodiments, for example, the beverage has a CO₂ level up to 7.0 volumes carbon dioxide. Typical embodiments may have, for example, from 0.5 to 5.0 volumes of carbon dioxide. As used here and independent claims, one volume of carbon dioxide is defined as the amount of carbon dioxide absorbed by any given quantity of water at 16 °C (60° F) temperature and atmospheric pressure. A volume of gas occupies the same space as does the water by which it is absorbed. The carbon dioxide content can be selected by those skilled in the art based on the desired level of effervescence and the impact of the carbon dioxide on the taste or mouthfeel of the beverage. The carbonation can be natural or synthetic.

The beverage concentrates and beverages disclosed here may contain additional ingredients, such as nutrients, including, generally, any of those typically found in beverage formulations. These additional ingredients, for example, can typically be added to a stabilized beverage concentrate. Examples of such additional ingredients include, but are not limited to, fiber, caffeine, caramel and other coloring agents or dyes, antifoaming agents, gums, emulsifiers, tea solids, cloud components, and nutrients such as fiber, mineral and non-mineral nutritional supplements, for instance vitamins.

Examples of suitable mineral nutritional supplement ingredients are known to those of ordinary skill in the art and include, but are not limited to, added calcium, chloride, chromium, potassium, magnesium, phosphorous, sodium, sulfur, cobalt, copper, fluorine, iodine, manganese, molybdenum, nickel, selenium, vanadium, zinc, iron, and the like or combinations thereof. The minerals may be added in any form compatible with human nutritional requirements and may be added to any desired level. The amounts in the beverage product or formulation may be at any suitable percentage of the Reference Daily Intake (RDI), where such RDI are established. For example, the mineral may be present at an upper limit of: 2%, 5%, 10%, 20%, 25%, 30%, 40%, 50%, 60%, 75%, 100%, 150%, 200%, 300%, 400%, or 500% of the RDI. The mineral may be present at a lower limit of: 1%, 2%, 5%, 10%, 20%, 25%, 30%, 40%, 50%, 60%, 75%, 100%, 150%, 200%, or 300% of the RDI, where established. Alternatively, the amount of added mineral may be measured in international units (IU) or weight/weight (w/w). It should be understood that the term "added" (e.g., "added calcium") as used here and in the appended claims refers to an added component obtained from external sources and does not include a component that is inherently present in the beverage product or formulation. For example, "added calcium" as used here and in the appended claims means that the calcium is obtained from external sources and does not include calcium that is inherent in the beverage product or formulation. Suitable added minerals for the beverage products and formulations disclosed here can be derived from any known or otherwise effective nutrient source that provides the targeted mineral separately. For example added calcium sources include, but are not limited to, e.g., magnesium lactate, zinc lactate, or any other magnesium or zinc source suitable for use in a beverage product or formulation.

Examples of non-mineral nutritional supplement ingredients are known to those of ordinary skill in the art and include, for example, antioxidants and vitamins, including Vitamins A, D, E (tocopherol), C (ascorbic acid), B (thiamine), B₂ (riboflavin), B₃ (nicotinamide), B₄ (adenine), B₅ (pantothenic acid, calcium), B₆ (pyridoxine HCl), B₁₂ (cyanocobalamin), and K₁ (phylloquinone), niacin, folic acid, biotin, and combinations thereof. The optional non-mineral nutritional supplements are typically present in amounts generally accepted under good manufacturing practices. Exemplary amounts are between 1% and 100% RDI, where such RDI are established. In certain exemplary embodiments the non-mineral nutritional supplement ingredient(s) are present in an amount of from 5% to 20% RDI, where established.

Any suitable fiber nutrient is included in embodiments of the invention, known to those of ordinary skill in the art. One example of a fiber ingredient is maltodextrin, which is a digestion resistant fiber. Maltodextrin is commercially available as the product Fibersol®-2 (Archer Daniels Midland Company, Clinton, Iowa).

### EXAMPLES

### Example 1

The efficacy for inhibition of fading of colors derived from natural sources in beverage products subjected to UV light radiation exposure was tested experimentally by adding about 152 parts per million (ppm, mg/L) of enzymatically modified isoquercitrin (EMIQ) to a beverage composition colored with 71.8 ppm natural beta-carotene and containing about 132 ppm ascorbic acid. The ingredients of the beverage composition are listed below in Table 2.

Beverage compositions with beta-carotene were prepared as formulated and pasteurized in 480 mL glass bottles. The beverage compositions were then subjected to UV light radiation having an intensity of 0.35 W/m² measured at 340 nm and a wavelength that simulates unfiltered sunlight in 30 °C (86 degree Fahrenheit) air temperature for 36 hours. The appearance of the beverage compositions with beta-carotene was observed for color fading every twelve hours.

**Table 2. Beverage Formula with Beta-Carotene**

| **Ingredient** | **ppm Beverage** |
|---|---|
| Acid | 700-800 |
| Ascorbic Acid | 130 - 140 |
| Fortification (Vitamins/Minerals) | 9,000 - 10,000 |
| EMIQ | 150 - 200 |
| Juice Concentrate | 63,000 - 65,000 |
| Flavor | 2700 - 2900 |
| Liquid Beta-Carotene | 70 - 75 |
| Granulated Sucrose | 12,900 |
| Treated Water | To 1 Liter |

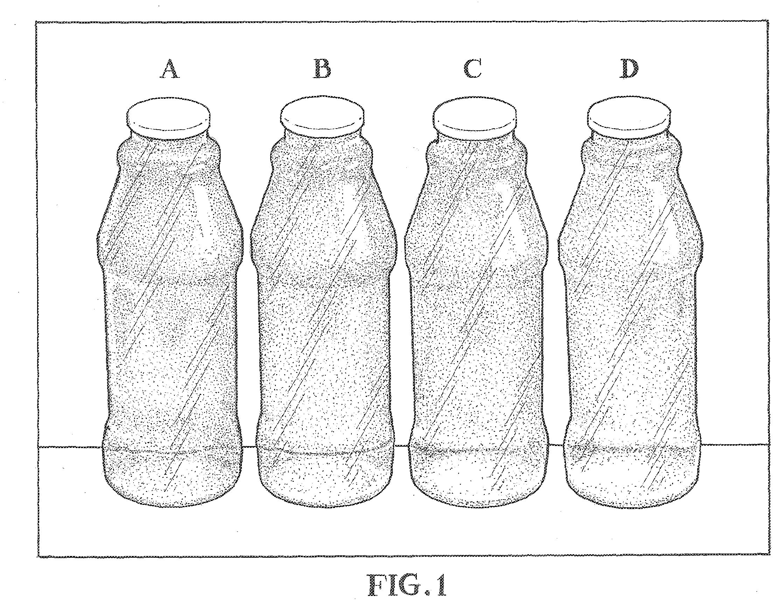

In addition to the beverage composition samples with beta-carotene exposed to UV light radiation as described above, a control sample was tested to monitor the change in color of the composition when stored in the dark. FIG. 1 shows the results of the UV light radiation exposure on the beverage composition samples. Four samples having a formulation according to Table 2 were tested; Samples A-D: Sample A is the control sample not exposed to UV light radiation. Sample B is a sample following exposure to 12 hours of UV light radiation, Sample C is a sample following exposure to 24 hours of UV light radiation, and Sample D is a sample following exposure to 36 hours of UV light radiation. Very little color fading of the intense yellow color of the beverage composition colored with beta-carotene color and containing 152 ppm EMIQ was observed in any of Samples B, C, or D, after even 36 hours of UV light radiation exposure (i.e., Sample D).

### Example 2

The efficacy for inhibition of fading of colors derived from natural sources in beverage products subjected to UV light radiation exposure was tested experimentally by adding about 152 parts per million (ppm, mg/L) of enzymatically modified isoquercitrin (EMIQ) to a beverage composition colored with 8.6 ppm natural beta-carotene and containing about 132 ppm ascorbic acid. The ingredients of the beverage composition with beta-carotene are listed below in Table 3.

Beverage compositions were prepared as formulated and pasteurized in 480 mL glass bottles. The beverage compositions were then subjected to UV light radiation having an intensity of 0.35 W/m² measured at 340 nm and a wavelength that simulates unfiltered sunlight in 30 °C (86 degree Fahrenheit) air temperature for 36 hours. The appearance of the beverage compositions with beta-carotene was observed for color fading every twelve hours.

**Table 3. Beverage Formula with Beta-Carotene**

| **Ingredient** | **ppm Beverage** |
|---|---|
| Acid | 895.9 |
| Ascorbic Acid | 130 - 140 |
| Fortification (Vitamins/Minerals) | 9,000-10,000 |
| EMIQ | 150-200 |
| Juice Concentrate | 63,000 - 65,000 |
| Flavor | 1600 - 1700 |
| Liquid Beta-Carotene | 8 - 10 |
| Granulated Sucrose | 13,700 |
| Treated Water | To 1 Liter |

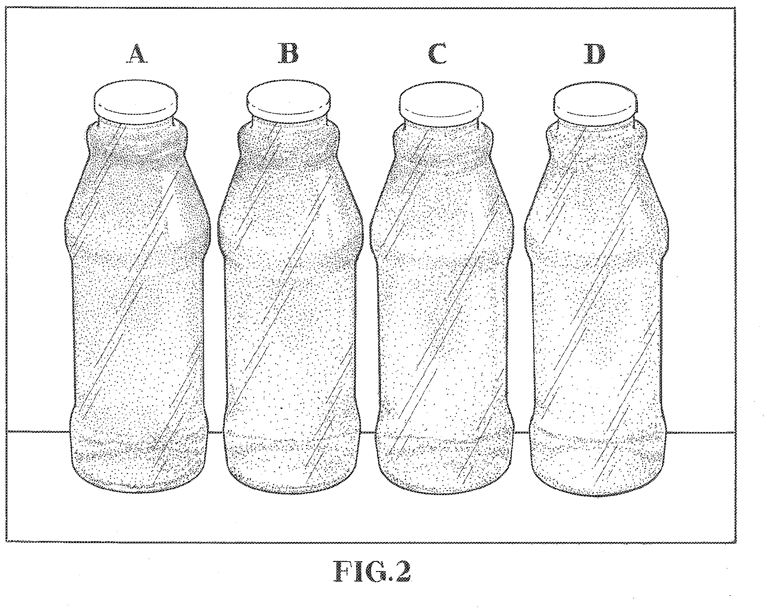

In addition to the beverage composition samples with beta-carotene exposed to UV light radiation as described above, a control sample was tested to monitor the change in color of the beverage composition with beta-carotene when stored in the dark. FIG. 2 shows the results of the UV light radiation exposure on the beverage composition samples. Four samples having a formulation according to Table 3 were tested; Samples A-D: Sample A is the control sample not exposed to UV light radiation, and has a pale yellow color. Sample B is a sample following exposure to 12 hours of UV light radiation, Sample C is a sample following exposure to 24 hours of UV light radiation, and Sample D is a sample following exposure to 36 hours of UV light radiation. Slight color fading of the pale yellow of the beverage composition colored with 8.6 ppm beta-carotene color and containing 152 ppm EMIQ was observed after each of 24 (i.e., Sample C) and 36 hours of UV light radiation exposure (i.e., Sample D).

### Example 3

The efficacy for inhibition of fading of colors derived from natural sources in beverage products subjected to UV light radiation exposure was tested experimentally by adding about 146 parts per million (ppm, mg/L) of enzymatically modified isoquercitrin (EMIQ) to a beverage composition colored with 90 µL/L natural apple extract. The ingredients of the beverage composition with natural apple extract are listed below in Table 4.

Beverage compositions were prepared as formulated and pasteurized in 480 mL glass bottles. The beverage compositions were then subjected to UV light radiation having an intensity of 0.35 W/m² measured at 340 nm and a wavelength that simulates unfiltered sunlight in 30 °C (86 degree Fahrenheit) air temperature for 36 hours. The appearance of the beverage compositions with natural apple extract was observed for color fading at the end of the thirty-six hours.

**Table 4. Beverage Formula with Natural Apple Extract**

| **Ingredient** | **ppm Beverage** |
|---|---|
| Acid | 860 - 960 |
| Fortification (Vitamins/Minerals) | 3000 - 3200 |
| EMIQ | 146.0 |
| White Grape Juice Concentrate | 59686 |
| Natural Apple Extract | 0.098 |
| Flavor | 980 - 1000 |
| Granulated Sucrose | 18591 |
| Treated Water | To 1 Liter |

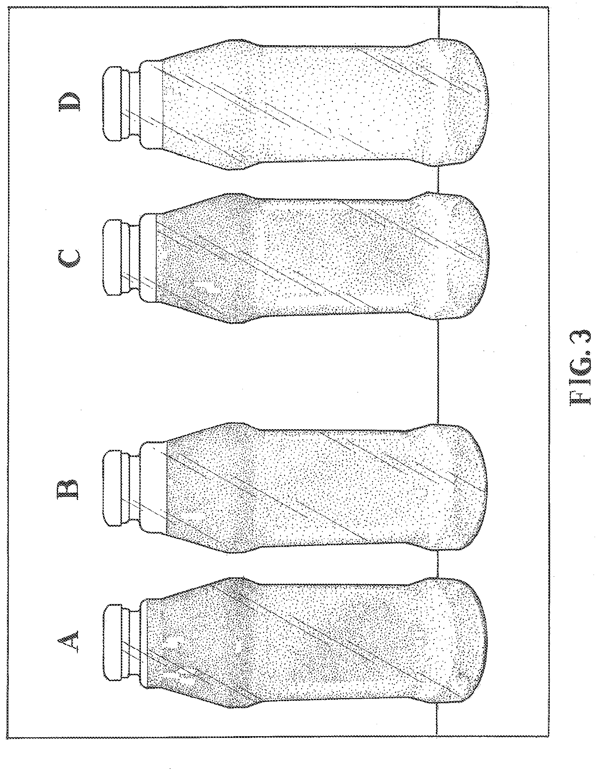

In addition to a beverage composition sample with natural apple extract exposed to UV light radiation as described above, a control sample was tested to monitor the change in color of the beverage composition when stored in the dark. FIG. 3 shows the results of the UV light radiation exposure on a beverage composition samples according to Table 4; Samples A and B: Sample A is the control sample not exposed to UV light radiation and Sample B is the sample following exposure to 36 hours of UV light radiation. Slight color fading of the light yellow beverage composition colored with 90 µL/L natural apple extract and containing 146 ppm EMIQ was observed after 36 hours of UV light radiation exposure (i.e., Sample B).

### Comparative Example 4

An example for the efficacy tests of inhibition of fading of colors derived from natural sources, in the absence of EMIQ, in beverage products subjected to UV light radiation exposure was performed by preparing a beverage composition colored with 90 µL/L natural apple extract. The ingredients of the beverage composition are listed above in Table 4, except that no EMIQ was added.

Beverage compositions were prepared as formulated and pasteurized in 480 mL glass bottles. The beverage compositions were then subjected to UV light radiation having an intensity of 0.35 W/m² measured at 340 nm and a wavelength that simulates unfiltered sunlight in 30 °C (86 degree Fahrenheit) air temperature for 36 hours. The appearance of the beverage compositions with natural apple extract was observed for color fading at the end of the thirty-six hours.

In addition to a beverage composition sample exposed to UV light radiation as described above, a control sample was tested to monitor the change in color of the beverage composition when stored in the dark. FIG. 3 shows the results of the UV light radiation exposure on the beverage composition samples according to Table 5; Samples C and D: Sample C is the control sample not exposed to UV light radiation and Sample D is the sample following exposure to 36 hours of UV light radiation. Significant color fading of the light yellow beverage composition colored with 90 µL/L natural apple extract but without any EMIQ was observed after 36 hours of UV light radiation exposure (i.e., Sample D). Consequently, the inhibition of the color fading of the beverage composition of Example 3 upon subjection to UV light radiation can be attributed to the presence of the EMIQ.

### Example 5

The efficacy for inhibition of fading of colors derived from natural sources in beverage products subjected to UV light radiation exposure was tested experimentally by adding about 152 parts per million (ppm, mg/L) of enzymatically modified isoquercitrin (EMIQ) and 353.2 ppm fumaric acid to a beverage composition colored with 189.5 ppm black carrot and containing about 132 ppm ascorbic acid. The ingredients of the beverage composition are listed below in Table 5.

Beverage compositions were prepared as formulated and pasteurized in 480 mL glass bottles. The beverage compositions were then subjected to UV light radiation having an intensity of 0.35 W/m² measured at 340 nm and a wavelength that simulates unfiltered sunlight in 30 °C (86 degree Fahrenheit) air temperature for 36 hours. The appearance of the beverage compositions with black carrot was observed for color fading every twelve hours.

**Table 5. Beverage Formula with Black Carrot**

| **Ingredient** | **ppm Beverage** |
|---|---|
| Buffer | 132.1 |
| Ascorbic Acid | 130 - 140 |
| Fortification (Vitamins/Minerals) | 9,000 - 10,000 |
| Fumaric Acid | 353.2 |
| EMIQ | 150-200 |
| Juice Concentrate | 63,200 - 65,200 |
| Flavor | 4000 - 4400 |
| Black Carrot Juice Concentrate | 189.5 |
| Granulated Sucrose | 13,700 |
| Treated Water | To 1 Liter |

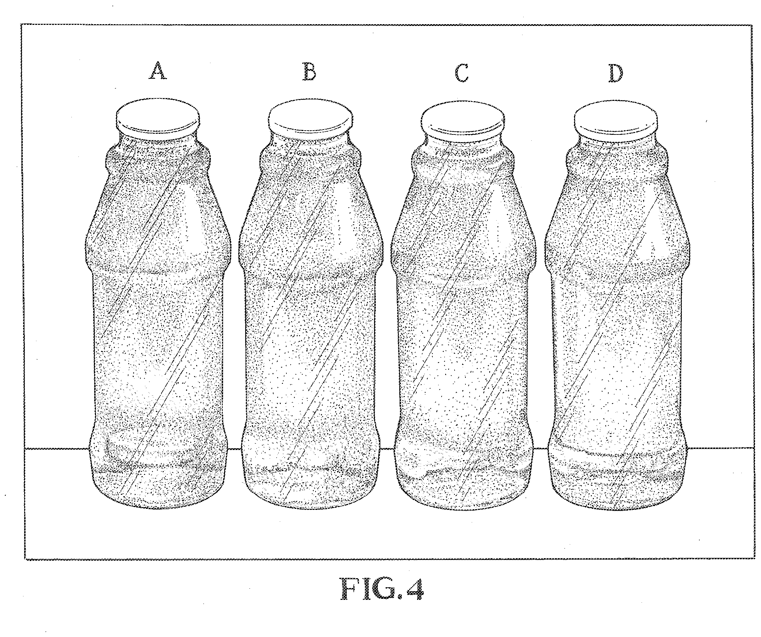

In addition to the beverage composition samples exposed to UV light radiation as described above, a control sample was tested to monitor the change in color of the beverage composition when stored in the dark. FIG. 4 shows the results of the UV light radiation exposure on the beverage composition samples. Four samples having a formulation according to Table 5 were tested; Samples A-D: Sample A is the control sample not exposed to UV light radiation. Sample B is a sample following exposure to 12 hours of UV light radiation, Sample C is a sample following exposure to 24 hours of UV light radiation, and Sample D is a sample following exposure to 36 hours of UV light radiation. Slight color fading of the deep red of the beverage composition colored with black carrot color and containing 152 ppm EMIQ was observed after each of 24 (i.e., Sample C) and 36 hours of UV light radiation exposure (i.e., Sample D).

### Example 6

The efficacy for inhibition of fading of colors derived from natural sources in beverage products subjected to UV light radiation exposure was tested experimentally by adding about 152 parts per million (ppm, mg/L) of enzymatically modified isoquercitrin (EMIQ) and 353.2 ppm fumaric acid to a beverage composition colored with 403 ppm black carrot.

Beverage compositions were prepared and pasteurized in 480 mL glass bottles. The beverage compositions were then subjected to UV light radiation having an intensity of 0.35 W/m² measured at 340 nm and a wavelength that simulates unfiltered sunlight in 30 °C (86 degree Fahrenheit) air temperature for 36 hours. The appearance of the beverage compositions with black carrot was observed for color fading after thirty-six hours.

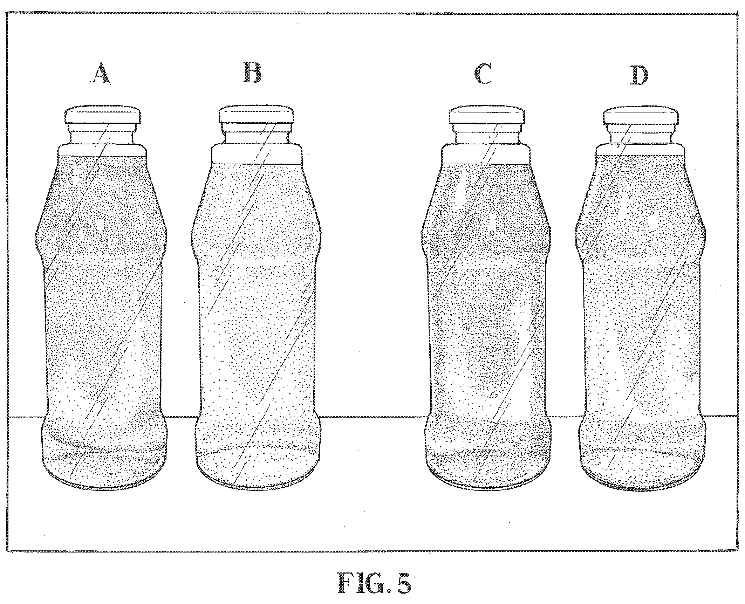

In addition to a beverage composition sample exposed to UV light radiation as described above, a control sample was tested to monitor the change in color of the beverage composition when stored in the dark. FIG. 5 shows the results of the UV light radiation exposure on the beverage composition samples; Samples C and D: Sample C is the control sample not exposed to UV light radiation and Sample D is the sample following exposure to 36 hours of UV light radiation. Slight color fading of the deep red of the beverage composition colored with 403 ppm natural black carrot color was observed after thirty-six hours of exposure to UV light radiation (i.e., Sample D).

### Comparative Example 7

An example for the efficacy tests of inhibition of fading of colors derived from natural sources, in the absence of EMIQ, in beverage products subjected to UV light radiation exposure was performed by preparing a beverage composition colored with 403 ppm black carrot. The ingredients of the beverage composition were the same as Example 6, except that no EMIQ was added.

Beverage compositions were prepared and pasteurized in 480 mL glass bottles. The beverage compositions were then subjected to UV light radiation having an intensity of 0.35 W/m² measured at 340 nm and a wavelength that simulates unfiltered sunlight in 30 °C (86 degree Fahrenheit) air temperature for 36 hours. The appearance of the beverage compositions with black carrot was observed for color fading at the end of the thirty-six hours.

In addition to a beverage composition sample exposed to UV light radiation as described above, a control sample was tested to monitor the change in color of the beverage composition when stored in the dark. FIG. 5 shows the results of the UV light radiation exposure on the beverage composition samples prepared according to Example 6 except without any EMIQ: Samples A and B: Sample A is the control sample not exposed to UV light radiation and Sample B is the sample following exposure to 36 hours of UV light radiation. Significant color fading of the deep red of the beverage composition colored with 403 black carrot color and containing 353.2 ppm fumaric acid but without any EMIQ was observed after 36 hours of UV light radiation exposure (i.e., Sample B). Consequently, the inhibition of the color fading of the beverage composition of Example 6 upon subjection to UV light radiation can be attributed to the presence of the EMIQ.

### Comparative Example 8

The efficacy for inhibition of fading of colors derived from natural sources in beverage products subjected to UV light radiation exposure was tested experimentally by adding about 146 parts per million (ppm, mg/L) of enzymatically modified isoquercitrin (EMIQ) and 353.2 ppm fumaric acid to a beverage composition colored with 200 ppm purple sweet potato.

Beverage compositions were prepared and pasteurized in 480 mL glass bottles. The beverage compositions were then subjected to UV light radiation having an intensity of 0.35 W/m² measured at 340 nm and a wavelength that simulates unfiltered sunlight in 30 °C (86 degree Fahrenheit) air temperature for 36 hours. The appearance of the beverage compositions with purple sweet potato was observed for color fading after thirty-six hours.

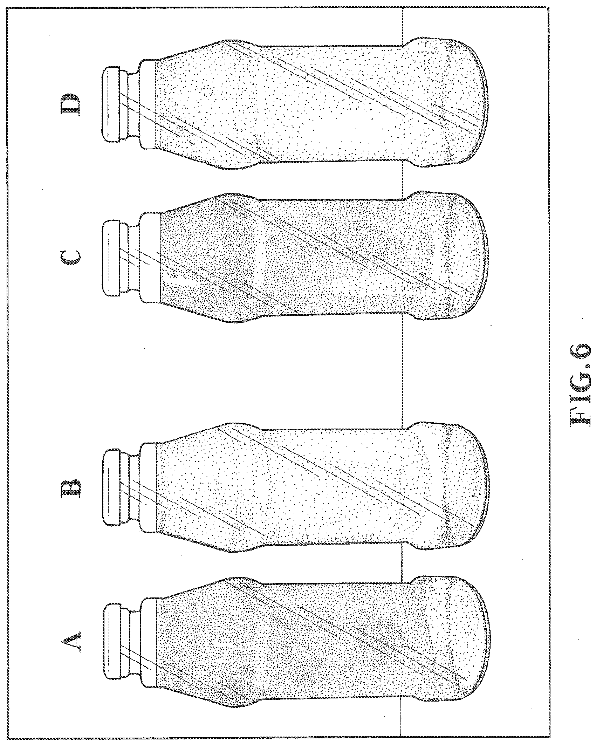

In addition to a beverage composition sample exposed to UV light radiation as described above, a control sample was tested to monitor the change in color of the beverage composition when stored in the dark. FIG. 6 shows the results of the UV light radiation exposure on the beverage composition samples. Sample A is the control sample not exposed to UV light radiation and Sample B is the sample following exposure to 36 hours of UV light radiation. Significant color fading of the light red of the beverage composition colored with 200 ppm natural purple sweet potato color was observed after thirty-six hours of exposure to UV light radiation (i.e., Sample B). Accordingly, the combination of EMIQ and fumaric acid was not effective to substantially inhibit color fading of the anthocyanin color of purple sweet potato.

### Comparative Example 9

An example for the efficacy tests of inhibition of fading of colors derived from natural sources, in the absence of EMIQ, in beverage products subjected to UV light radiation exposure was performed by preparing a beverage composition colored with 200 ppm purple sweet potato. The ingredients of the beverage composition are as discussed above in Comparative Example 8, except that no EMIQ was added.

Beverage compositions were prepared and pasteurized in 480 mL glass bottles. The beverage compositions were then subjected to UV light radiation having an intensity of 0.35 W/m² measured at 340 nm and a wavelength that simulates unfiltered sunlight in 30 °C (86 degree Fahrenheit) air temperature for 36 hours. The appearance of the beverage compositions with purple sweet potato was observed for color fading at the end of the thirty-six hours.

In addition to a beverage composition sample exposed to UV light radiation as described above, a control sample was tested to monitor the change in color of the beverage composition when stored in the dark. FIG. 6 shows the results of the UV light radiation exposure on the beverage composition samples; Samples C and D: Sample C is the control sample not exposed to UV light radiation and Sample D is the sample following exposure to 36 hours of UV light radiation. Significant color fading of the light red of the beverage composition colored with 200 ppm purple sweet potato color and containing 353.2 ppm fumaric acid but without any EMIQ was observed after 36 hours of UV light radiation exposure (i.e., Sample D). The color fading was even greater than that of Comparative Example 8 comprising EMIQ.

### Example 10

The efficacy for inhibition of fading of different amounts of a color derived from natural sources in beverage products subjected to UV light radiation exposure was tested experimentally by adding about 146 parts per million (ppm, mg/L) of enzymatically modified isoquercitrin (EMIQ) to a beverage composition colored with either 18.1 ppm or 7.6 ppm natural beta-carotene and containing about 180 ppm ascorbic acid.

Beverage compositions were prepared and pasteurized in 480 mL glass bottles. The beverage compositions were then subjected to UV light radiation having an intensity of 0.35 W/m² measured at 340 nm and a wavelength that simulates unfiltered sunlight in 30 °C (86 degree Fahrenheit) air temperature for 36 hours. The appearance of the beverage compositions with beta-carotene was observed for color fading after thirty-six hours.

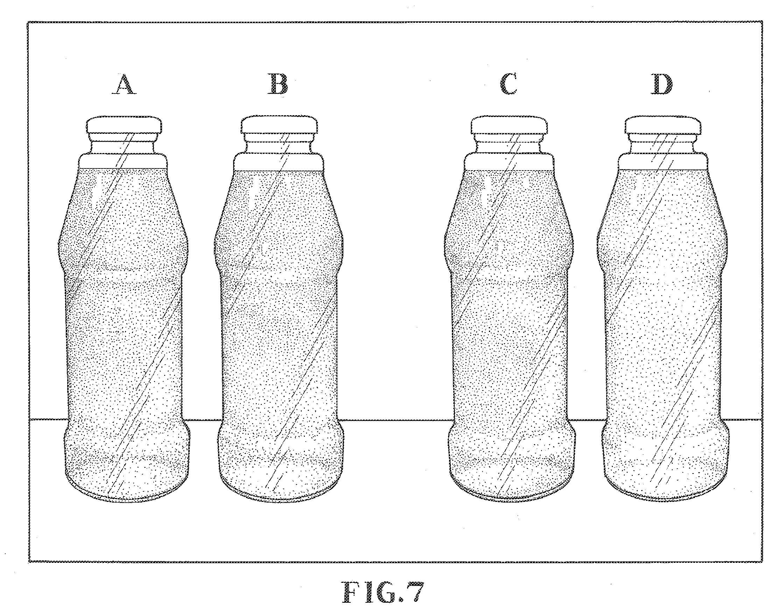

In addition to the beverage composition samples exposed to UV light radiation as described above, control samples were tested to monitor the change in color of the beverage composition when stored in the dark. FIG. 7 shows the results of the UV light radiation exposure on the beverage composition samples according to Example 10; Samples A-D: Sample A is the control sample containing 18.1 ppm beta-carotene not exposed to UV light radiation and Sample B is a sample containing 18.1 ppm beta-carotene following exposure to 36 hours of UV light radiation. Sample C is the control sample containing 7.6 ppm beta-carotene not exposed to UV light radiation and Sample D is a sample containing 7.6 ppm beta-carotene following exposure to 36 hours of UV light radiation.

No color fading of the bright yellow of the beverage composition colored with 18.1 ppm beta-carotene color and containing 146 ppm EMIQ was observed after 36 hours of UV light radiation exposure (i.e., Sample B). In contrast, slight color fading of the pale yellow of the beverage composition colored with 8.6 ppm beta-carotene color and containing 146 ppm EMIQ was observed after 36 hours of UV light radiation exposure (i.e., Sample D). Accordingly, a beverage composition comprising a lower concentration of color derived from natural sources was observed to be more susceptible to color fading from exposure to UV light radiation than the same beverage composition comprising a higher concentration of the same color.

## Claims

1. A beverage product comprising:
water:
a color derived from natural sources or its synthetic equivalent; and
a color fading inhibitor comprising a compound selected from the group consisting of enzymatically modified isoquercitrin (EMIQ), rutin and myricitrin, in an amount of at least 30 ppm to inhibit fading of the color derived from natural sources or its synthetic equivalent,
wherein the color derived from natural sources is selected from the group consisting of beta-carotene, black carrot, natural apple extract, and combinations thereof, and
wherein the synthetic equivalent to a color derived from natural sources has the same structure as the color derived from natural sources but has been prepared synthetically.

2. The beverage product of claim 1, wherein the EMIQ is present at a concentration of between 30 ppm and 1000 ppm, preferably wherein the EMIQ is present at a concentration of between 80 ppm and 500 ppm.

3. The beverage product of claim 1, wherein, after thirty-six hours of exposure to UV light radiation of an intensity of 0.35 W/m² measured at 340 nm at a wavelength that simulates unfiltered sunlight in 30 degrees Celsius (86 degree Fahrenheit) air temperature, the beverage has an absorbance value at the optimal wavelength for the color derived from natural sources of no more than 25% less than the light measure value of the same beverage product stored in the dark for thirty-six hours, as measured by spectrophotometer, or wherein, after twelve hours of exposure to UV light radiation of an intensity of 0.35 W/m² measured at 340 nm at a wavelength that simulates unfiltered sunlight in 30 degrees Celsius (86 degree Fahrenheit) air temperature, the beverage has an absorbance value at the optimal wavelength for the color derived from natural sources of no more than 10% less than the light measure value of the same beverage product stored in the dark for twelve hours, as measured by spectrophotometer.

4. The beverage product of claim 1, further comprising at least one nutrient selected from the group consisting of maltodextrin, ascorbic acid, vitamin E, magnesium, and zinc.

5. The beverage product of claim 1, further comprising fumaric acid.

6. A beverage product comprising:
water;
black carrot color;
fumaric acid; and
enzymatically modified isoquercitrin (EMIQ).

7. The beverage product of claim 6, further comprising at least one nutrient selected from the group consisting of maltodextrin, ascorbic acid, vitamin E, magnesium, and zinc.

8. The beverage product of claim 6, wherein the fumaric acid is present at a concentration of between 100 ppm and 1000 ppm.

9. The beverage product of claim 6, wherein the EMIQ is present at a concentration of between 30 ppm and 1000 ppm.

10. The beverage product of claim 6, wherein, after thirty-six hours of exposure to UV light radiation of an intensity of 0.35 W/m² measured at 340 nm at a wavelength that simulates unfiltered sunlight in 30 degrees Celsius (86 degree Fahrenheit) air temperature, the beverage has an absorbance value at the optimal wavelength for the color derived from natural sources of no more than 25% less than the light measure value of the same beverage product stored in the dark for thirty-six hours, as measured by spectrophotometer, or wherein, after twelve hours of exposure to UV light radiation of an intensity of 0.35 W/m² measured at 340 nm at a wavelength that simulates unfiltered sunlight in 30 degrees Celsius (86 degree Fahrenheit) air temperature, the beverage has an absorbance value at the optimal wavelength for the color derived from natural sources of no more than 10% less than the light measure value of the same beverage product stored in the dark for twelve hours, as measured by a spectrophotometer.

11. A method for inhibiting color fading of a beverage product exposed to light, comprising:
providing a beverage composition comprising a color derived from natural sources or its synthetic equivalent; and
adding to the beverage composition a color fading inhibitor comprising a compound selected from the group consisting of enzymatically modified isoquercitrin, rutin and myricitrin in an amount effective to inhibit color fading,
wherein the color derived from natural sources is selected from the group consisting of beta-carotene, black carrot, natural apple extract, and combinations thereof, and
wherein the synthetic equivalent to a color derived from natural sources has the same structure as the color derived from natural sources but has been prepared synthetically.

12. The method of claim 11, further comprising adding fumaric acid to the beverage composition.

13. The method of claim 11, wherein the beverage composition further comprises ascorbic acid.

14. The method of claim 11, wherein after one week of storage at a temperature of up to 43.33°C (110°F) following manufacture, the beverage has an absorbance value at the optimal wavelength for the color derived from natural sources of no more than 25% less than the light measure value of the same beverage product stored for the same amount of time at 4.44°C (40°F), as measured by the spectrophotometer.

15. The method of claim 11, wherein the beverage composition further comprises at least one nutrient selected from the group consisting of maltodextrin, ascorbic acid, vitamin E, magnesium, and zinc.

## Patentansprüche

1. Getränkeprodukt, umfassend:
Wasser:
eine aus natürlichen Quellen stammende Farbe oder ihr synthetisches Äquivalent; und
einen Farbverblassungsinhibitor, umfassend eine Verbindung, ausgewählt aus der Gruppe bestehend aus enzymatisch modifiziertem Isoquercitrin (EMIQ), Rutin und Myricitrin, in einer Menge von mindestens 30 ppm, um das Verblassen der aus natürlichen Quellen stammenden Farbe oder ihres synthetischen Äquivalents zu hemmen,
wobei die aus natürlichen Quellen stammende Farbe aus der Gruppe bestehend aus Beta-Carotin, schwarzer Karotte, natürlichem Apfelextrakt und Kombinationen davon ausgewählt ist, und
wobei das synthetische Äquivalent einer aus natürlichen Quellen stammenden Farbe die gleiche Struktur aufweist wie die aus natürlichen Quellen stammende Farbe, aber synthetisch hergestellt wurde.

2. Getränkeprodukt nach Anspruch 1, wobei das EMIQ in einer Konzentration zwischen 30 ppm und 1000 ppm vorliegt, wobei das EMIQ vorzugsweise in einer Konzentration zwischen 80 ppm und 500 ppm vorliegt.

3. Getränkeprodukt nach Anspruch 1, wobei nach sechsunddreißig Stunden Bestrahlung mit UV-Licht einer Intensität von 0,35 W/m², gemessen bei 340 nm, bei einer Wellenlänge, die ungefiltertes Sonnenlicht bei 30 Grad Celsius (86 Grad Fahrenheit) Lufttemperatur simuliert, das Getränk einen Absorptionswert bei der optimalen Wellenlänge für die aus natürlichen Quellen stammenden Farbe aufweist, der um nicht mehr als 25% niedriger ist als der Lichtmesswert des gleichen Getränkeprodukts, das sechsunddreißig Stunden lang im Dunkeln gelagert wurde, gemessen mit einem Spektralphotometer, oder
wobei das Getränk nach zwölf Stunden Bestrahlung mit UV-Licht einer Intensität von 0,35 W/m², gemessen bei 340 nm, bei einer Wellenlänge, die ungefiltertes Sonnenlicht bei 30 Grad Celsius (86 Grad Fahrenheit) Lufttemperatur simuliert, das Getränk einen Absorptionswert bei der optimalen Wellenlänge für die aus natürlichen Quellen stammenden Farbe aufweist, der um nicht mehr als 10% niedriger ist als der Lichtmesswert des gleichen Getränkeprodukts, das zwölf Stunden lang im Dunkeln gelagert wurde, gemessen mit einem Spektralphotometer.

4. Getränkeprodukt nach Anspruch 1, ferner umfassend mindestens einen Nährstoff, ausgewählt aus der Gruppe bestehend aus Maltodextrin, Ascorbinsäure, Vitamin E, Magnesium und Zink.

5. Getränkeprodukt nach Anspruch 1, ferner umfassend Fumarsäure.

6. Getränkeprodukt, umfassend:
Wasser;
schwarze Karottenfarbe;
Fumarsäure; und
enzymatisch modifiziertes Isoquercitrin (EMIQ).

7. Getränkeprodukt nach Anspruch 6, ferner umfassend mindestens einen Nährstoff, ausgewählt aus der Gruppe bestehend aus Maltodextrin, Ascorbinsäure, Vitamin E, Magnesium und Zink.

8. Getränkeprodukt nach Anspruch 6, wobei die Fumarsäure in einer Konzentration zwischen 100 ppm und 1000 ppm vorliegt.

9. Getränkeprodukt nach Anspruch 6, wobei das EMIQ in einer Konzentration zwischen 30 ppm und 1000 ppm vorliegt.

10. Getränkeprodukt nach Anspruch 6, wobei nach sechsunddreißig Stunden Bestrahlung mit UV-Licht einer Intensität von 0,35 W/m², gemessen bei 340 nm, bei einer Wellenlänge, die ungefiltertes Sonnenlicht bei 30 Grad Celsius (86 Grad Fahrenheit) Lufttemperatur simuliert, das Getränk einen Absorptionswert bei der optimalen Wellenlänge für die aus natürlichen Quellen stammenden Farbe aufweist, der um nicht mehr als 25% niedriger ist als der Lichtmesswert des gleichen Getränkeprodukts, das sechsunddreißig Stunden lang im Dunkeln gelagert wurde, gemessen mit einem Spektralphotometer, oder
wobei das Getränk nach zwölf Stunden Bestrahlung mit UV-Licht einer Intensität von 0,35 W/m², gemessen bei 340 nm, bei einer Wellenlänge, die ungefiltertes Sonnenlicht bei 30 Grad Celsius (86 Grad Fahrenheit) Lufttemperatur simuliert, das Getränk einen Absorptionswert bei der optimalen Wellenlänge für die aus natürlichen Quellen stammenden Farbe aufweist, der um nicht mehr als 10% niedriger ist als der Lichtmesswert des gleichen Getränkeprodukts, das zwölf Stunden lang im Dunkeln gelagert wurde, gemessen mit einem Spektralphotometer.

11. Verfahren zur Hemmung des Farbverblassens eines lichtausgesetzten Getränkeprodukts, umfassend:
Bereitstellen einer Getränkezusammensetzung, umfassend eine aus natürlichen Quellen stammende Farbe oder ihr synthetisches Äquivalent; und Hinzufügen eines Farbverblassungsinhibitors zu der Getränkezusammensetzung, umfassend eine Verbindung, ausgewählt aus der Gruppe bestehend aus enzymatisch modifiziertem Isoquercitrin, Rutin und Myricitrin in einer Menge, die wirksam ist, um das Farbverblassen zu hemmen,
wobei die aus natürlichen Quellen stammende Farbe aus der Gruppe bestehend aus Beta-Carotin, schwarzer Karotte, natürlichem Apfelextrakt und Kombinationen davon ausgewählt ist, und
wobei das synthetische Äquivalent einer aus natürlichen Quellen stammenden Farbe die gleiche Struktur aufweist wie die aus natürlichen Quellen stammende Farbe, aber synthetisch hergestellt wurde.

12. Verfahren nach Anspruch 11, ferner umfassend das Hinzufügen von Fumarsäure zu der Getränkezusammensetzung.

13. Verfahren nach Anspruch 11, wobei die Getränkezusammensetzung ferner Ascorbinsäure umfasst.

14. Verfahren nach Anspruch 11, wobei nach einer Woche Lagerung bei einer Temperatur von bis zu 43,33 Grad Celsius (110 Grad Fahrenheit) nach der Herstellung das Getränk einen Absorptionswert bei der optimalen Wellenlänge für die aus natürlichen Quellen stammenden Farbe aufweist, der um nicht mehr als 25% niedriger ist als der Lichtmesswert des gleichen Getränkeprodukts, das für die gleiche Zeit bei 4,44 Grad Celsius (40 Grad Fahrenheit) gelagert wurde, gemessen mit dem Spektralphotometer.

15. Verfahren nach Anspruch 11, wobei die Getränkezusammensetzung ferner mindestens einen Nährstoff, ausgewählt aus der Gruppe bestehend aus Maltodextrin, Ascorbinsäure, Vitamin E, Magnesium und Zink, umfasst.

## Revendications

1. Produit de boisson comprenant :
de l'eau ;
une couleur dérivée de sources naturelles ou son équivalent synthétique ; et
un inhibiteur de décoloration de couleur choisi dans le groupe constitué par l'isoquercitrine enzymatiquement modifiée (EMIQ), la rutine et la myricitrine, en une quantité d'au moins 30 ppm pour inhiber la décoloration de la couleur dérivée de sources naturelles ou son équivalent synthétique,
dans lequel la couleur dérivée de sources naturelles est choisie dans le groupe constitué par le béta-carotène, la carotte noire, l'extrait de pomme naturel et leurs combinaisons, et
dans lequel l'équivalent synthétique à une couleur dérivée de sources naturelles a la même structure que la couleur dérivée de sources naturelles mais a été préparée de manière synthétique.

2. Produit de boisson selon la revendication 1, dans lequel la EMIQ est présente à une concentration comprise entre 30 ppm et 1000 ppm, de préférence dans lequel la EMIQ est présente à une concentration comprise entre 80 ppm et 500 ppm.

3. Produit de boisson selon la revendication 1, dans lequel, après trente six heures d'exposition à un rayonnement de lumière UV d'une intensité de 0,35 W/m² mesurée à 340 nm à une longueur d'onde qui simule la lumière du soleil non filtrée à une température de l'air de 30 degrés Celsius (86 degrés Fahrenheit), la boisson a une valeur d'absorbance à la longueur d'onde optimale pour la couleur dérivée de sources naturelles de pas plus de 25 % de moins que la valeur de mesure de lumière du même produit de boisson stocké dans l'ombre durant trente six heures, telle que mesurée par spectrophotomètre, ou bien dans lequel, après douze heures d'exposition à un rayonnement de lumière UV d'une intensité de 0,35 W/m² mesurée à 340 nm à une longueur d'onde qui simule la lumière du soleil non filtrée à une température de l'air de 30 degrés Celsius (86 degrés Fahrenheit), la boisson a une valeur d'absorbance à la longueur d'onde optimale pour la couleur dérivée de sources naturelles de pas plus de 10 % de moins que la valeur de mesure de lumière du même produit de boisson stocké dans l'ombre durant douze heures, telle que mesurée par spectrophotomètre.

4. Produit de boisson selon la revendication 1, comprenant en outre au moins un élément nutritif choisi dans le groupe constitué par la maltodextrine, l'acide ascorbique, la vitamine E, le magnésium et le zinc.

5. Produit de boisson selon la revendication 1, comprenant en outre de l'acide fumarique.

6. Produit de boisson comprenant :
de l'eau ;
une couleur de carotte noire ;
de l'acide fumarique ; et
de l'isoquercitrine enzymatiquement modifiée (EMIQ).

7. Produit de boisson selon la revendication 6, comprenant en outre un élément nutritif choisi dans le groupe constitué par la maltodextrine, l'acide ascorbique, la vitamine E, le magnésium et le zinc.

8. Produit de boisson selon la revendication 6, dans lequel l'acide fumarique est présent à une concentration comprise entre 100 ppm et 1000 ppm.

9. Produit de boisson selon la revendication 6, dans lequel la EMIQ est présente à une concentration comprise entre 30 ppm et 1000 ppm.

10. Produit de boisson selon la revendication 6, dans lequel, après trente six d'exposition à un rayonnement de lumière UV d'une intensité de 0,35 W/m² mesurée à 340 nm à une longueur d'onde qui simule la lumière du soleil non filtrée à une température de l'air de 30 degrés Celsius (86 degrés Fahrenheit), la boisson a une valeur d'absorbance à la longueur d'onde optimale pour la couleur dérivée de sources naturelles de pas plus de 25 % de moins que la valeur de mesure de lumière du même produit de boisson stocké dans l'ombre durant trente six heures, telle que mesurée par spectrophotomètre, ou bien
dans lequel, après douze heures d'exposition à un rayonnement de lumière UV d'une intensité de 0,35 W/m² mesurée à 340 nm à une longueur d'onde qui simule la lumière du soleil non filtrée à une température de l'air de 30 degrés Celsius (86 degrés Fahrenheit), la boisson a une valeur d'absorbance à la longueur d'onde optimale pour la couleur dérivée de sources naturelles de pas plus de 10 % de moins que la valeur de mesure de lumière du même produit de boisson stocké dans l'ombre durant douze heures, telle que mesurée par un spectrophotomètre.

11. Procédé d'inhibition de la décoloration de couleur d'un produit de boisson exposé à la lumière, comprenant :
la fourniture d'une composition de boisson comprenant une couleur dérivée de sources naturelles ou son équivalent synthétique ; et
l'addition à la composition de boisson d'un inhibiteur de décoloration de boisson comprenant un composé choisi dans le groupe constitué par l'isoquercitrine enzymatiquement modifiée, la rutine et la myricitrine en une quantité efficace pour inhiber la décoloration de couleur,
dans lequel la couleur dérivée de sources naturelles est choisie dans le groupe constitué par le béta-carotène, la carotte noire, l'extrait de pomme naturel et leurs combinaisons, et
dans lequel l'équivalent synthétique à une couleur dérivée de sources naturelles a la même structure que la couleur dérivée de sources naturelles mais a été préparée de manière synthétique.

12. Procédé selon la revendication 11, comprenant en outre l'addition d'acide fumarique à la composition de boisson.

13. Procédé selon la revendication 11, dans lequel la composition de boisson comprend en outre de l'acide ascorbique.

14. Procédé selon la revendication 11, dans lequel après une semaine de stockage à une température de jusqu'à 43,33 °C (110 °F) après la fabrication, la boisson a une valeur d'absorbance à la longueur d'onde optimale pour la couleur dérivée de sources naturelles de pas plus de 25 % de moins que la valeur de mesure de lumière du même produit de boisson stocké durant la même quantité de temps à 4,44 °C (40 °F), telle que mesurée par le spectrophotomètre.

15. Procédé selon la revendication 11, dans lequel la composition de boisson comprend en outre au moins un élément nutritif choisi dans le groupe constitué par la maltodextrine, l'acide ascorbique, la vitamine E, le magnésium et le zinc.
